# EUROPÄISCHE PATENTSCHRIFT

(11) **EP 2 807 429 B1**
(45) Veröffentlichungstag und Bekanntmachung des Hinweises auf die Patenterteilung: **13.04.2016**
(21) Anmeldenummer: 12823072.9
(22) Anmeldetag: 03.12.2012
(51) Int. Cl.: F24J 2/52

(54) **MONTAGESET FÜR TRAPEZFÖRMIGE RIPPEN EINES TRAPEZBLECHS**
MOUNTING KIT FOR ATTACHMENT TO TRAPEZOIDAL CORRUGATIONS OF SHEET METAL
KIT DE FIXATION POUR ATTACHER À UNE TÔLE DE PROFILÉ TRAPÉZOÏDAL

(30) Priorität: 01.12.2011 DE 202011108518 U
(43) Veröffentlichungstag der Anmeldung: 03.12.2014
(73) Patentinhaber: Schletter GmbH, 83527 Kirchdorf (DE)
(72) Erfinder: URBAN, Hans, 83527 Haag (DE); FLUHRER, Dieter, 84437 Reichertsheim (DE)
(74) Vertreter: Thum, Bernhard
(86) Internationale Anmeldenummer: PCT/DE2012/001147
(87) Internationale Veröffentlichungsnummer: WO 2013/097840

(56) Entgegenhaltungen:
- WO-A1-2011/118754
- DE-A1-102007 018 212
- DE-A1-102008 009 608
- DE-U1-202008 007 838
- DE-U1-202009 003 862
- DE-U1-202010 001 238
- DE-U1-202010 007 234

## Beschreibung

Die Erfindung betrifft ein Montageset umfassend ein Halteelement für eine trapezförmige Rippe ines Trapezblechs. Die Erfindung betrifft außerdem eine Anordnung eines solchen Montagesets sowie ein Montageverfahren. Das Montageset eignet sich besonders für die Montage gerahmter Photovoltaikmodule auf Dächern, die mit handelsüblichen Trapezblechen eingedeckt sind.

Aus DE 20 2008 007 838 U1 ist eine Schräganordnung von Photovoltaikmodulen auf einem Trapezblech bekannt. Die Schräganordnung umfasst mehrere Halteelemente zum zentralen Aufsetzen auf die Rippen des Trapezblechs sowie zwei quer zu den Rippen gerichtete Tragschienen für Photovoltaikmodulen. Die Halteelemente umgreifen die Rippen und sind jeweils an beiden schrägen Seiten der Rippen befestigt. Die Tragschienen liegen auf den Halteelementen auf und sind mit diesen aufwändig zu verschrauben. Außerdem sind die Halteelemente für verschieden geformte Rippen individuell anzufertigen. Aus DE 20 2009 003 124 U1 ist ein ähnliches Halteelement bekannt, das mit einer Tragschiene ineinandergeschoben werden kann.

Aus DE 20 2010 007 234 U1 ist eine Befestigung für Photovoltaik-Module auf Trapezblechen bekannt. Die Befestigung umfasst ein Basiselement, das an seiner Oberseite eine längliche Befestigungsöffnung für die Montage eines Photovoltaikmodule aufweist. Dadurch, dass die längliche Befestigungsöffnung parallel zur Rippe verläuft, eignet sich das Basiselement für die Befestigung von quer zur Rippe verlaufenden Kanten des Photovoltaikmoduls. Das Basiselement ist ebenfalls für verschieden geformte Rippen individuell anzufertigen. Aus DE 10 2008 009 608 A1 ist eine ähnliche Vorrichtung bekannt.

Aus DE 20 2009 003 862 U1 ist eine Abstützvorrichtung für Funktionsaufbauten auf Dächern bekannt. Die Abstützvorrichtung ist auf eine Rippe eines Trapezbleches montiert und umfasst zwei scharnierartige Blechelemente. Diese sind mit ihren seitlichen Scharnierflügeln an den Schrägseiten der Rippe befestigt. Die oberen Scharnierflügel überlappen sich auf der Oberseite der Rippe und enthalten quer zur Rippe gerichtete Langlöcher, durch die ein Gewindebolzen geführt ist. Die Winkelstellung der seitlichen Scharnierflügel und die Überlappung der oberen Scharnierflügel sind variabel, sodass die Abstützvorrichtung universal auf unterschiedlich geformte Rippen montiert werden kann. Die Anzahl und die Komplexität der einzelnen Bauteile sowie deren hohe Toleranzanforderungen werden als jedoch nachteilig angesehen. DE 20 2010 001 238 U1 und DE 20 2010 007 000 U1 zeigen ähnliche Lösungen.

Es ist eine Aufgabe der Erfindung, ein bauteilarmes und montagefreundliches Montageset für eine trapezförmige Rippe eines Trapezbleches zu schaffen. Das Montageset soll sich zur Befestigung von quer zur Rippe verlaufenden Kanten eines Photovoltaikmoduls eignen und für verschieden geformte Rippen universal verwendbar, jedoch besonders einfach zu fertigen sein.

Die Aufgabe wird mit dem im Anspruch 1 angegebenen Montageset gelöst. Vorteilhafte Ausgestaltungen sowie ein Montageverfahren sind in den Unteransprüchen angegeben.

Das Montageset eignet sich zur Befestigung an einer trapezförmigen Rippe eines handelsüblichen Trapezblechs. Derartige trapezförmige Rippen weisen für gewöhnlich eine Rippenoberseite und zwei Rippenschrägseiten auf, wobei sich die Rippenschrägseiten von der Rippenoberseite nach unten erstrecken und dabei divergieren können. Eine lediglich gedachte Rippenunterseite, kann die Trapezform im Querschnitt vervollständigen.

Das Montageset umfasst drei Komponenten: einen Montageadapter und zwei Halteelemente. Der Montageadapter hat eine Oberseite, eine Unterseite die von der Oberseite abgewandt ist, einen länglichen Befestigungskanal der zur Oberseite hin offen ist, und zwei Befestigungsflansche. Vorzugsweise sind die Oberseite und die Unterseite parallel zueinander. Sowohl die Oberseite als auch die Unterseite kann ein- oder mehrteilig gestaltet sein. Beide sind bevorzugt plan. Es sind jedoch Absätze und Knicke in der Oberseite und der Unterseite vorstellbar. Die Befestigungsflansche, sind bevorzugt ein Bestandteil der Unterseite sein. Der längliche Befestigungskanal kann als beidseitig hinterschnittene Längsnut ausgeführt sein.

Die Oberseite, die Unterseite, der längliche Befestigungskanal und die zwei Befestigungsflansche sind zusammen eine starre Einheit, beispielsweise als Blechumformteil oder Strangpressteil. Jeder der zwei Befestigungsflansche weist ein längliches Halterandpaar auf, das quer zu dem länglichen Befestigungskanal gerichtet ist. Jedes Halterandpaar weist zwei Halteränder auf, die bevorzugt parallel zueinander sind. In einer Draufsicht auf die Oberseite befindet sich der längliche Befestigungskanal zwischen den zwei Befestigungsflanschen, vorzugsweise mittig.

Die zwei Halteelemente haben jeweils einen Befestigungsabschnitt und ein davon abstehendes Eingriffsmittel. Dieses abstehende Eingriffsmittel kann aus mehreren kann Abschnitten gestaltet sein. Wesentlich ist, dass der Befestigungsabschnitt und das abstehende Eingriffsmittel eines jeden der zwei Halteelemente zusammen eine integrale und/oder starre Einheit sind, insbesondere ein Blechstück. Der Befestigungsabschnitt kann vorgefertigte Bohrungen enthalten zum Durchführen von Schrauben oder Nieten. Jedes Halteelement kann eine vom Montageadapter separate Losstellung A und eine bezüglich des Befestigungskanals parallele Eingriffsstellung B aufweisen.

Das abstehende Eingriffsmittel eines jeden Halteelements ist dergestalt ausgeführt, dass erstens ausgehend von der vom Montageadapter separaten Losstellung A das abstehende Eingriffsmittel mit einem der länglichen Halterandpaare in Eingriff gebracht werden kann, und zweitens in der parallelen Eingriffsstellung B das abstehende Eingriffsmittel das längliche Halterandpaar hintergreifen kann, und zwar an einer von mehreren möglichen Längspositionen entlang des länglichen Halterandpaares und in einer von mehreren möglichen Schwenkpositionen parallel zum Befestigungskanal.

Der Montageadapter ist dergestalt ausgeführt und auf der Rippenoberseite anordenbar, dass die Unterseite der Rippenoberseite zugewandt ist und der Befestigungskanal längs zu der trapezförmigen Rippe gerichtet ist und der Befestigungskanal zentral über der Rippenoberseite angeordnet ist und die Halterandpaare sich mehrheitlich oberhalb einer parallel durch die Rippenoberseite verlaufenden Ebene erstrecken und sich zumindest abschnittweise freistehend über den zwei Rippenschrägseiten befinden.

Die Befestigungsabschnitte und die abstehenden Eingriffsmittel sind dergestalt ausgeführt, dass in der parallelen Eingriffsstellung B die Befestigungsabschnitte mittels Schrauben oder Nieten an den zwei Rippenschrägseiten befestigt sein können und der Montageadapter mittels der abstehenden Eingriffsmittel gegen die Rippenoberseite niederhalten und bevorzugt zudem geklemmt werden kann.

Das erfindungsgemäße Montageset ist mit mehreren Vorteilen verbunden. Es kann aus lediglich drei Bauteilen bestehen, wobei Schrauben oder Nieten fester Bestandteil des Montagesets sein können. Das Montageset kann ein einfacher Weise noch am Einsatzort zusammengesetzt und montagefreundlich auf einer trapezförmigen Rippe befestigt werden. Es eignet sich besonders für die Befestigung von quer zur Rippe verlaufenden Kanten eines Photovoltaikmoduls, wie dies in DE 20 2010 007 234 U1 ausführlich offenbart ist. Eine derartige Kante kann direkt auf der Oberseite des Montageadapters aufliegen und mittels des länglichen Befestigungskanals und dem Fachmann bekannten Klemmmittel sicher und einfacher befestigt werden. Außerdem eignet sich das Montageset für verschieden geformt Rippen universal eignet. So können die Rippenoberseiten unterschiedlich breit sein und die Rippenschrägseiten unterschiedlichen Steigungen aufweisen. Besonders hervorzuheben ist, dass der Montageadapter und die Halteelemente sehr einfach und damit kostengünstig zu fertigen sind. Ein weiter Vorteil besteht darin, dass die Bauteile des Montagesets einfach und platzsparend zu lagern sind. Die zwei Halteelemente können gleiche Teile sein. Darüber hinaus eine Anordnung mit Montageset sehr robust gegenüber statischen und dynamischen Lasten.

Eine erste vorteilhafte Ausführungsform ist dadurch gekennzeichnet, dass mindestens einher der zwei Befestigungsflansche eine Längsausnehmung enthält, die zu dem Befestigungskanal quer gerichtet ist, und mindestens eines der länglichen Halterandpaare mittels einander zugewandter Ränder dieser Längsausnehmung ausgeführt ist. Eine solche Längsausnehmung kann beispielsweise als Langloch oder als ein einseitig offener Schlitz ausgeführt sein. Die länglichen Innenränder einer solchen Längsausnehmung stehen sich gegenüber bzw. sind einander zugewandt und bilden eines der Halterandpaare. Ein hierfür besonders geeignetes Halteelement ist dadurch gekennzeichnet, dass das abstehende Eingriffsmittel zwei voneinander weg weisende, d.h. gegengleich nach außen gerichtete Vorsprünge aufweist, um eines der länglichen Halterandpaar beidseitig hintergreifen zu können. Die Vorsprünge können wie Hakennasen ausgeführt sein. Ein solches Halteelement kann in der separaten Losstellung A, welche zur parallelen Eingriffsstellung B gedreht ist, in die Längsausnehmung eingeführt werden und anschließend durch Drehen in die parallele Eingriffsstellung B gebracht werden. Der Bewegungsablauf für dieses Zusammensetzen gleicht dem einer einfachen Renkverbindung. Die Drehung beträgt in der Praxis etwa 60 bis 110 Grad.

Eine zweite vorteilhafte Ausführungsform ist dadurch gekennzeichnet, dass mindestens eines der länglichen Halterandpaare mittels voneinander abgewandter Ränder eines der zwei Befestigungsflansche ausgeführt ist, und die Befestigungsflansche optional Endanschläge für die Halteelemente aufweisen. Die voneinander abgewandten Ränder können insbesondere die quer zum Befestigungskanal verlaufenden Außenränder der Befestigungsflansche sein. Ein hierfür besonders geeignetes Halteelement ist dadurch gekennzeichnet, dass das abstehende Eingriffsmittel zwei gegengleich aufeinander zu weisende, d.h. gegengleich nach innen gerichtete Vorsprünge aufweist, um eines der länglichen Halterandpaare beidseitig zu hintergreifen. Die Vorsprünge können wir Hakennasen ausgeführt sein. Das Halteelement kann durch einfaches Aufschieben auf den Befestigungsflansch das Halterandpaar hintergreifen. Ist ein Endanschlag vorgesehen, so erfolgt das Aufschieben in Kombination mit einer Schwenkbewegung.

Eine weitere vorteilhafte Ausführungsform ist dadurch gekennzeichnet, dass der Montageadapter ein nachbearbeitetes Strangpressteil ist, an dem mehrere Eckbereiche freigestellt sind, beispielsweise mittels Stanzen. Damit kann eine zumindest abschnittsweise Verkürzung der Befestigungsflansche erreicht werden. Durch diese Maßannahme kann der Betätigungsbereich vor den Schrauben oder Nieten freigehalten werden für eine montagefreundliche Betätigung derselben. Es versteht sich, dass das Strangpressteil zusätzlich bearbeitet sein kann, beispielsweise um die Längsausnehmungen auszunehmen.

Eine weitere vorteilhafte Ausführungsform ist dadurch gekennzeichnet, dass der längliche Befestigungskanal zwei Längsenden aufweist und in einer Draufsicht auf die Oberseite sich die Befestigungsflansche und/oder die Halterandpaare mittig bezüglich der Längsenden befinden. Ein solcher Montageadapter kann an seiner Unterseite einen kreuzförmigen Umriss aufweisen und wie zu vor beschrieben hergestellt sein.

Eine weitere vorteilhafte Ausführungsform ist dadurch gekennzeichnet, dass das Montageset mindestens eine gummiartige Schutzunterlage aufweist, die zur Anordnung zwischen der Rippenoberseite und der Unterseite vorgesehen ist. Mittels einer solchen gummiartigen Schutzunterlage kann die Rippenoberseite vor Beschädigungen, beispielsweise Abrieb, geschützt werden. Die gummiartige Schutzunterlage kann aus einem EPDM-Material oder einem vergleichbaren Elastomere mit einer bevorzugten Shore-Härte zwischen 50 und 80 bestehen.

Ein vorteilhaftes Halteelements eines der vorgenannten Montagesets ist dadurch gekennzeichnet, dass das abstehende Eingriffsmittel zu dem Befestigungsabschnitt winklig angestellt ist und/oder das abstehende Eingriffsmittel an dem Befestigungsabschnitt mittig angeordnet ist und/oder dass das abstehende Eingriffsmittel und der Befestigungsabschnitt zusammen ein einteiliges Blechstück sind.

Ein vorteilhaftes Halteelement gemäß eines der vorgenannten Montagesets ist dadurch gekennzeichnet, dass dem Halteelement ein gummiartiges Abstandsmittel zugeordnet ist, das an dem Befestigungsabschnitt optional befestigt ist und das zur Anordnung zwischen dem Befestigungsabschnitt und einer der zwei Rippenschrägseiten vorgesehen ist. Das gummiartige Abstandsmittel kann aus einem EPDM-Material oder einem vergleichbaren Elastomere mit einer bevorzugten Shore-Härte zwischen 50 und 80 bestehen und am Befestigungsabschnitt beispielsweise mittels Kleben oder einer Schnapp- oder Klemmverbindung befestigt sein.

Betreffend die mindestens eine gummiartige Schutzunterlage und die gummiartigen Schutzunterlagen kann es vorteilhaft sein, dass die mindestens eine gummiartige Schutzunterlage an mindestens einem der gummiartigen Abstandsmittel angeformt ist. So kann an jedem gummiartigen Abstandmittel oben eine gummiartige Schutzunterlage angeformt sein.

Die Erfindung betrifft auch eine Anordnung eines der vorbeschriebenen Montagesets auf einer trapezförmigen Rippe eines Trapezblechs, wobei die trapezförmige Rippe eine Rippenoberseite und zwei Rippenschrägseiten aufweist.

Ein solche Anordnung ist dadurch gekennzeichnet, dass die Unterseite der Rippenoberseite zugewandt ist und der längliche Befestigungskanal längs zu der trapezförmigen Rippe gerichtet ist und der längliche Befestigungskanal zentral über der Rippenoberseite angeordnet ist und die Halterandpaare sich mehrheitlich oberhalb einer parallel durch die Rippenoberseite verlaufenden Ebene erstrecken und sich jedes der Halterandpaare zumindest abschnittweise freistehend über einer der zwei Rippenschrägseiten befindet.

Außerdem ist vorgesehen, dass die zwei Halteelemente in der parallelen Eingriffsstellung B sind und die Befestigungsabschnitte mittels Schrauben oder Nieten an den zwei Rippenschrägseiten befestigt sind, vorzugsweise flächenparallel zu den Rippenschrägseiten. Weiter ist vorgesehen, dass die abstehenden Eingriffsmittel die länglichen Halterandpaare hintergreifen jeweils an einer von mehreren möglichen Längspositionen entlang der länglichen Halterandpaare und in einer von mehreren möglichen Schwenkpositionen parallel zum Befestigungskanal. Schließlich ist der Montageadapter mittels der abstehenden Eingriffsmittel gegen die Rippenoberseite niedergehalten und bevorzugt zusätzlich geklemmt.

Bei einer solchen Anordnung ist vorteilhaft, wenn die gummiartigen Abstandsmittel zwischen den Befestigungsabschnitten und den Rippenschrägseiten angeordnet sind und/oder die mindestens eine gummiartige Schutzunterlage zwischen der Rippenoberseite und der Unterseite angeordnet ist.

Bei einer solchen Anordnung ist vorteilhaft, wenn bezüglich der Rippenoberseite die abstehenden Eingriffsmittel steiler gerichtet sind als die Schrägseite, an der diese befestigt sind. Dies kann dadurch erreicht werden, dass die abstehenden Eingriffsmittel zu den Befestigungsabschnitten wie zuvor beschreiben winklig angestellt sind.

Die Erfindung betrifft auch ein Montageverfahren zum Erlangen einer Anordnung mit einem Montageset enthaltend gummiartige Abstandsmittel. Das Montageverfahren zeichnet sich dadurch aus, dass während der Befestigung der Befestigungsabschnitte an den Rippenschrägseiten die gummiartigen Abstandsmittel komprimiert werden und die zwei Halteelemente dabei eine Bewegungskomponente nach unten erfahren und die zwei Halteelemente mittels der abstehenden Eingriffsmittel den Montageadapter zunehmend gegen die Rippenoberseite klemmen.

Nachfolgend wird die Erfindung anhand mehrerer Ausführungsbeispiele näher erläutert. Es zeigen:
- **Fig. 1**: ein Trapezblech mit trapezförmigen Rippen auf denen mehrere Montagesets angeordnet sind,
- **Fig. 2**: eines der Montagesets und einer der trapezförmigen Rippen gemäß **Fig. 1** im Detail,
- **Fig. 3**: das Montageset gemäß **Fig. 2** ohne trapezförmige Rippe,
- **Fig. 4**: eine Vorderansicht des Montagesets und der trapezförmigen Rippe gemäß **Fig. 2**,
- **Fig. 5**: eine Vorderansicht des Montagesets gemäß **Fig. 2** angeordnet auf einer anderen trapezförmigen Rippe,
- **Fig. 6 und 7**: zwei Montagestellungen A und B eines Halteelements eines Montagesets ähnlich **Fig. 3**
- **Fig. 8 und 9**: ein Montageset ähnlich **Fig. 3**
- **Fig. 10**: eine Seitenansicht des Montagesets gemäß **Fig. 8** und **9** mit Schrauben
- **Fig. 11**: eine Vorderansicht, des Montagesets gemäß **Fig. 10**
- **Fig. 12**: eine Draufsicht des Montagesets gemäß **Fig. 10**
- **Fig. 13**: eine Draufsicht auf einen Montageadapter des Montagesets gemäß **Fig. 10**
- **Fig. 14**: ein Halteelement des Montagesets gemäß **Fig. 8**
- **Fig**. **15** und **16**: einen Montagevorgang des Montagesets gemäß **Fig. 10** an einer trapezförmigen Rippe
- **Fig. 17**: ein alternatives Montageset
- **Fig. 18**: eine Vorderansicht des Montagesets gemäß **Fig**. **17** in anderer Anordnung
- **Fig. 19**: eine Vorderansicht des Montageset gemäß **Fig. 17** in anderer Anordnung
- **Fig. 20**: zwei Montageschritte A und B eines Halteelements des Montagesets gemäß **Fig. 17**

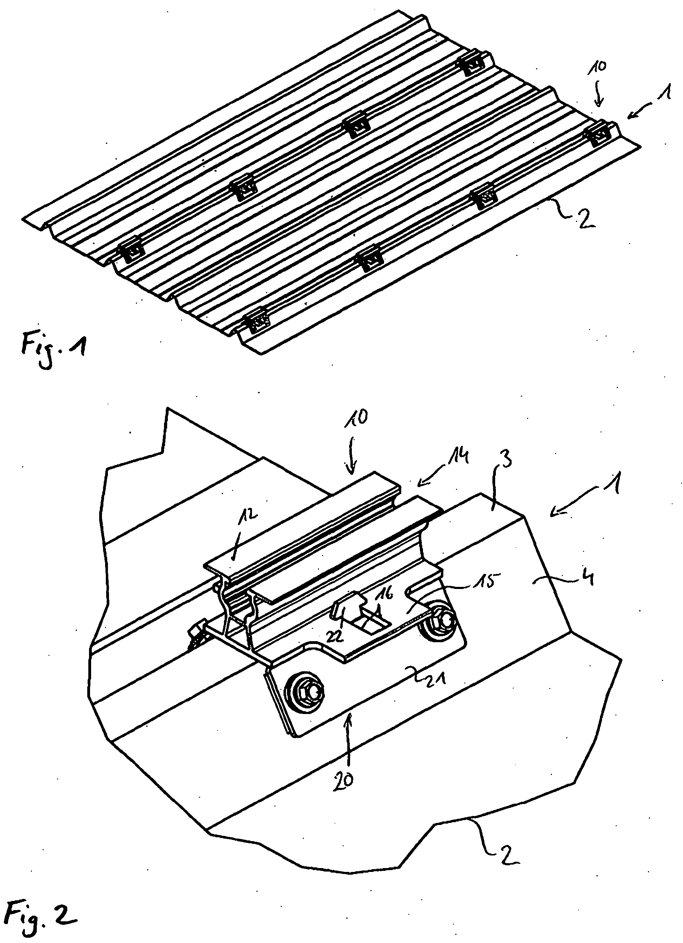

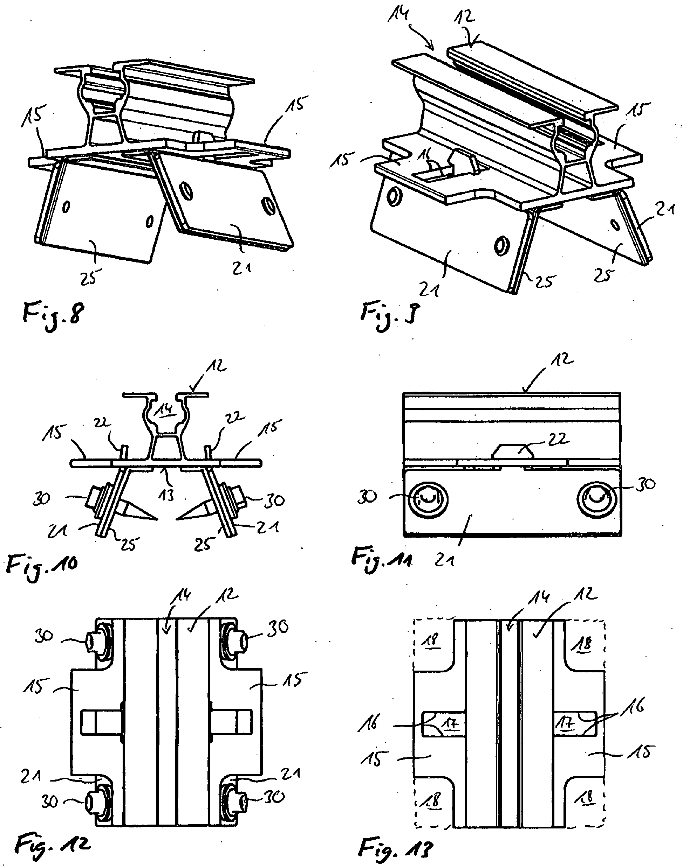

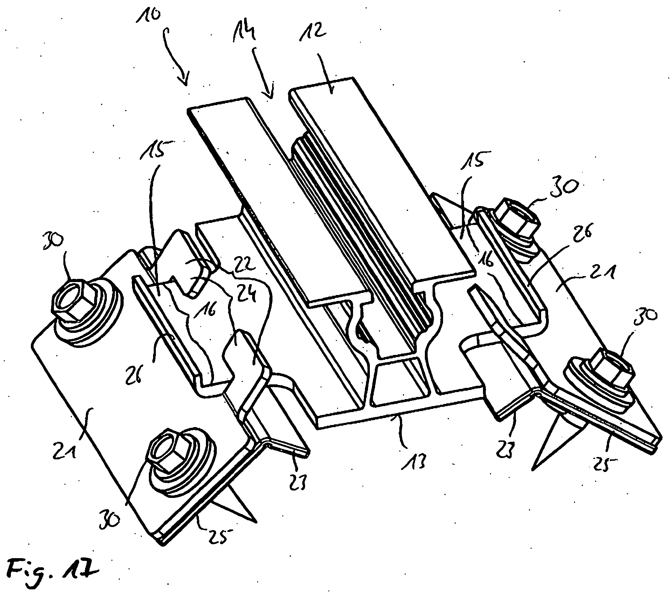

Das Montageset gemäß **Fig. 2** eignet sich ebenso wie das Montageset gemäß **Fig. 8** und **Fig. 17** zur Befestigung an einer trapezförmigen Rippe **1** eines handelsüblichen Trapezblechs **2**. Die trapezförmige Rippen **1** weisen eine Rippenoberseite **3** und zwei Rippenschrägseiten **4** auf, wobei sich die Rippenschrägseiten **4** von der Rippenoberseite **3** nach unten erstrecken und dabei divergieren. Eine lediglich gedachte Rippenunterseite **6** vervollständigt die Trapezform im Querschnitt.

Das Montageset umfasst drei Komponenten: einen Montageadapter **10** und zwei Halteelemente **20**. Der Montageadapter **10** hat eine Oberseite **12**, eine Unterseite **13** die von der Oberseite **12** abgewandt ist, einen länglichen Befestigungskanal **14** der zur Oberseite **12** hin offen ist, und zwei Befestigungsflansche **15**. Die Oberseite **12** und die Unterseite **13** sind parallel zueinander. Die Oberseite **12** ist zweiteilig gestaltet, die Unterseite **13** hingegen einteilig. Beide sind plan. Die Befestigungsflansche **15** sind ein Bestandteil der Unterseite **13**. Der längliche Befestigungskanal **14** ist als beidseitig hinterschnittene Längsnut ausgeführt.

Die Oberseite **12**, die Unterseite **13,** der längliche Befestigungskanal **14** und die zwei Befestigungsflansche **15** sind zusammen eine starre Einheit, hier ein Strangpressteil. Jeder der zwei Befestigungsflansche **15** weist ein längliches Halterandpaar **16** auf, das quer zu dem länglichen Befestigungskanal **14** gerichtet ist. Jedes Halterandpaar **16** weist zwei Halteränder auf, die parallel zueinander sind. In einer Draufsicht auf die Oberseite **12** befindet sich der längliche Befestigungskanal **14** mittig zwischen den zwei Befestigungsflanschen **15**.

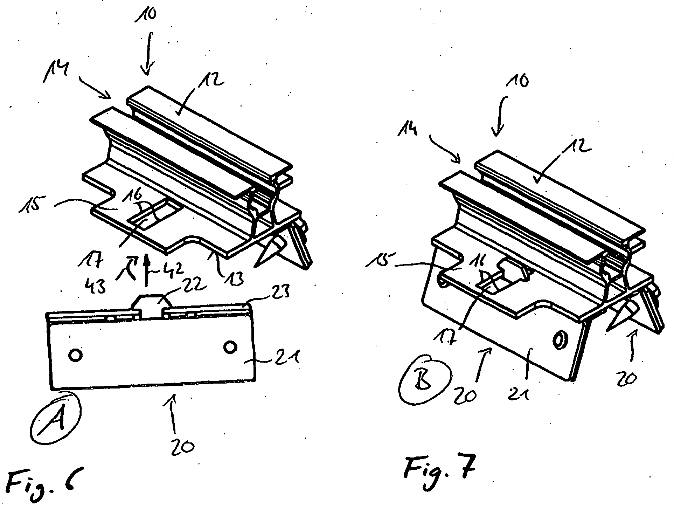

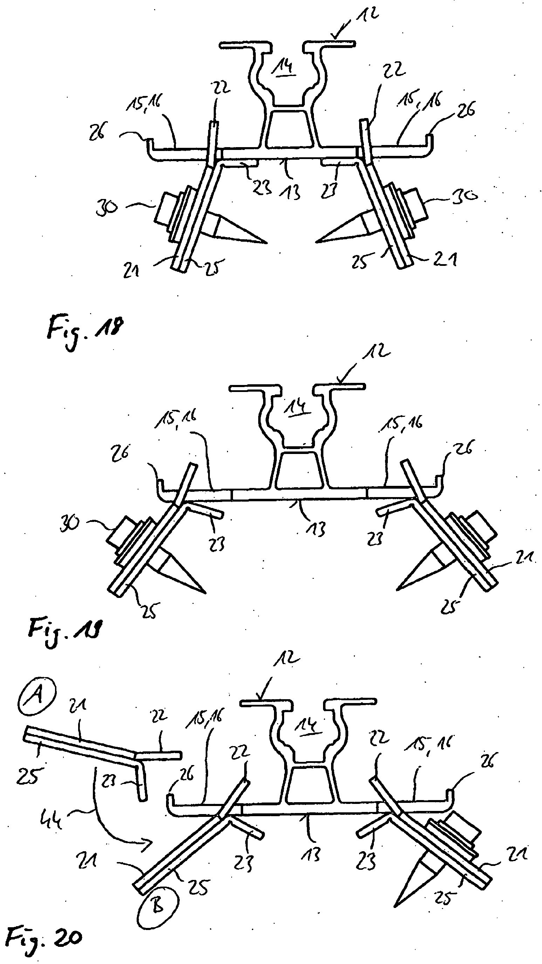

Die zwei Halteelementen **20** haben jeweils einen Befestigungsabschnitt **21** und ein davon abstehendes Eingriffsmittel **22**. Dieses abstehende Eingriffsmittel **22** ist gemäß der Ausführungsformen nach **Fig. 2** und **Fig. 8** aus genau einem Abschnitt oder gemäß der Ausführungsform nach **Fig. 17** aus genau zwei Abschnitten gestaltet. Wesentlich ist, dass der Befestigungsabschnitt **21** und das abstehende Eingriffsmittel **22** eines jeden der zwei Halteelemente **20** zusammen eine integrale und/oder starre Einheit sind, hier ein Blechstück. Der Befestigungsabschnitt **22** enthält vorgefertigte Bohrungen zum Durchführen von Schrauben **30** oder etwa Nieten. Jedes Halteelement **20** kann eine vom Montageadapter **10** separate Losstellung **A** und eine bezüglich des Befestigungskanals **14** parallele Eingriffsstellung **B** aufweisen, wie aus **Fig. 6** und **Fig. 7** beziehungsweise aus **Fig. 20** ersichtlich ist.

Das abstehende Eingriffsmittel **22** eines jeden Halteelements **20** ist dergestalt ausgeführt, dass erstens ausgehend von der vom Montageadapter **10** separaten Losstellung **A** das abstehende Eingriffsmittel **22** mit einem der länglichen Halterandpaare **16** in Eingriff gebracht werden kann, und zweitens in der parallelen Eingriffsstellung **B** das abstehende Eingriffsmittel **22** das längliche Halterandpaar **16** hintergreifen kann, und zwar ah einer von mehreren möglichen Längspositionen entlang des länglichen Halterandpaare **16** und in einer von mehreren möglichen Schwenkpositionen parallel zum Befestigungskanal **14**.

Der Montageadapter **10** ist weiter dergestalt ausgeführt und auf der Rippenoberseite **3** gemäß **Fig. 2** anordenbar, dass die Unterseite **13** der Rippenoberseite **3** zugewandt ist und der Befestigungskanal **14** längs zu der trapezförmigen Rippe **1** gerichtet ist und der Befestigungskanal **14** zentral über der Rippenoberseite **3** angeordnet ist und die Halterandpaare **16** sich mehrheitlich oberhalb einer parallel durch die Rippenoberseite **3** verlaufenden Ebene **5** erstrecken und sich zumindest abschnittweise freistehend über den zwei Rippenschrägseiten **4** befinden.

Die Befestigungsabschnitte **21** und die abstehenden Eingriffsmittel **22** sind dergestalt ausgeführt, dass in der parallelen Eingriffsstellung **B** die Befestigungsabschnitte **21** mittels Schrauben **30** oder Nieten an den zwei Rippenschrägseiten **4** befestigt sein können und der Montageadapter **10** mittels der abstehenden Eingriffsmittel **22** gegen die Rippenoberseite **3** niederhalten und bevorzugt zudem geklemmt werden kann.

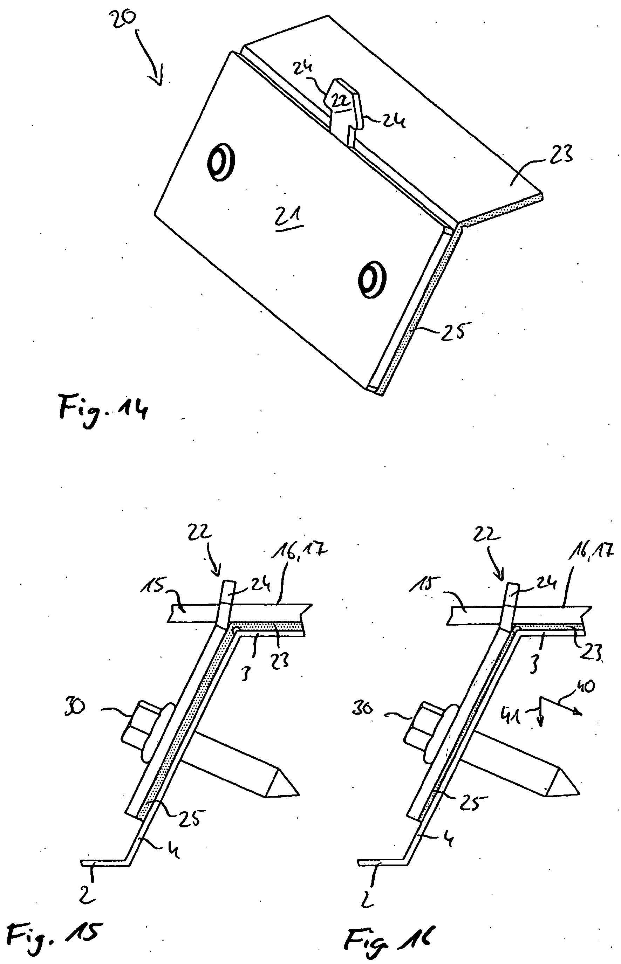

Das Montageset gemäß **Fig. 2** bis **16** zeichnet sich dadurch aus, dass jeder der zwei Befestigungsflanschen **15** eine Längsausnehmung **17** enthält, die zu dem Befestigungskanal **14** quer gerichtet ist, und die länglichen Halterandpaare **16** mittels einander zugewandter Ränder **16** der Längsausnehmungen **17** ausgeführt sind. Die beiden Längsausnehmungen **17** sind als Langlöcher ausgeführt. Einseitig offene Schlitze sind ebenso denkbar. Die länglichen Innenränder jeder Längsausnehmung **17** stehen sich gegenüber bzw. sind einander zugewandt und bilden eines der Halterandpaare **16**. Das hierfür passende Halteelement **20** ist so ausgeführt, dass das abstehende Eingriffsmittel **22** zwei voneinander weg weisende, d.h. gegengleich nach außen gerichtete Vorsprünge **24** aufweist (siehe **Fig. 14**), um eines der länglichen Halterandpaar **16** beidseitig hintergreifen zu können. Die Vorsprünge **24** sind wie Hakennasen ausgeführt sein. Ein solches Halteelement **20** kann in der separaten Losstellung **A,** welche zur parallelen Eingriffsstellung **B** gedreht ist, in die Längsausnehmung **17** mit einer Translation **42** eingeführt werden und anschließend durch ein Drehen **43** in die parallele Eingriffsstellung **B** gebracht werden, wie aus **Fig. 6** und **Fig. 7** ersichtlich ist. Der Bewegungsablauf für dieses Zusammensetzen gleicht dem einer einfachen Renkverbindung. Die Drehung beträgt in der Praxis etwa 60 bis 110 Grad.

Das Montageset gemäß **Fig. 17** bis **20** zeichnet sich dadurch aus, dass die länglichen Halterandpaare **16** mittels voneinander abgewandter Ränder **16** der zwei Befestigungsflansche **15** ausgeführt sind, und die Befestigungsflansche **15** optionale Endanschläge **26** für die Halteelemente **20** aufweisen. Die voneinander abgewandten Ränder **16** sind quer zum Befestigungskanal **14** verlaufenden Außenränder der Befestigungsflansche **15**. Das hierfür geeignetes Halteelement ist so ausgeführt, dass das abstehende Eingriffsmittel **22** zwei gegengleich aufeinander zu weisende, d.h. gegengleich nach innen gerichtete Vorsprünge **24** aufweist, um eines der länglichen Halterandpaare **16** beidseitig zu hintergreifen. Die Vorsprünge **24** können auch hier wie Hakennasen ausgeführt sein. Das Halteelement **20** kann durch einfaches Aufschieben auf den Befestigungsflansch **15** das Halterandpaar **16** hintergreifen. Ist ein Endanschlag **26** vorgesehen, so erfolgt das Aufschieben in Kombination mit einer Schwenkbewegung **44**.

Der Montageadapter **10 der** Ausführungsformen gemäß **Fig.** 2, **Fig. 8** und **Fig. 17** ist ein nachbearbeitetes Strangpressteil ist, an dem mehrere Eckbereiche **18** freigestellt sind, beispielsweise mittels Stanzen. Damit kann eine zumindest abschnittsweise Verkürzung der Befestigungsflansche **15** erreicht werden. Durch diese Maßannahme kann der Betätigungsbereich vor den Schrauben **30** freigehalten werden für eine montagefreundliche Betätigung derselben. Es versteht sich, dass das Strangpressteil zusätzlich bearbeitet ist, beispielsweise um die Längsausnehmungen **17** auszunehmen.

Der längliche Befestigungskanal **14** des Montageadapters **10** weist zwei Längsenden **19** auf. In einer Draufsicht auf die Oberseite **12** befinden sich die Befestigungsflansche **15** und/oder die Halterandpaare **16** mittig bezüglich der Längsenden **19**. Der Montageadapter **10** weist an seiner Unterseite **13** einen kreuzförmigen Umriss auf.

Dem Halteelement der Ausführungsformen gemäß **Fig. 2****,** **Fig. 8** und **Fig. 17** ist ein gummiartiges Abstandsmittel **25** zugeordnet ist, das an dem Befestigungsabschnitt **21** befestigt ist und das zur Anordnung zwischen dem Befestigungsabschnitt **21** und einer der zwei Rippenschrägseiten **4** vorgesehen ist.

Insbesondere aus **Fig. 14 bis Fig. 16** ist ersichtlich, dass das Montageset gemäß **Fig. 8** sowie **Fig. 17** zwei gummiartige Schutzunterlagen **23** aufweist, die zur Anordnung zwischen der Rippenoberseite **3** und der Unterseite **13** vorgesehen sind. Mittels einer solchen gummiartigen Schutzunterlage **23** kann die Rippenoberseite **3** vor Beschädigungen, beispielsweise Abrieb, geschützt werden. Die gummiartigen Schutzunterlagen **23** sind an den gummiartigen Abstandsmitteln **25** oben mittels einer Sollknickstelle angeformt.

Die Halteelementen der Montagesets gemäß **Fig. 2****,** **Fig. 8** und **Fig. 17** sind dergestalt ausgeführt, dass das abstehende Eingriffsmittel **22** zu dem Befestigungsabschnitt **21** winklig angestellt ist und das abstehende Eingriffsmittel **22 an** dem Befestigungsabschnitt **21** mittig angeordnet ist. Außerdem sind das abstehende Eingriffsmittel **22** und der Befestigungsabschnitt **21** jeweils zusammen ein einteiliges Blechstück.

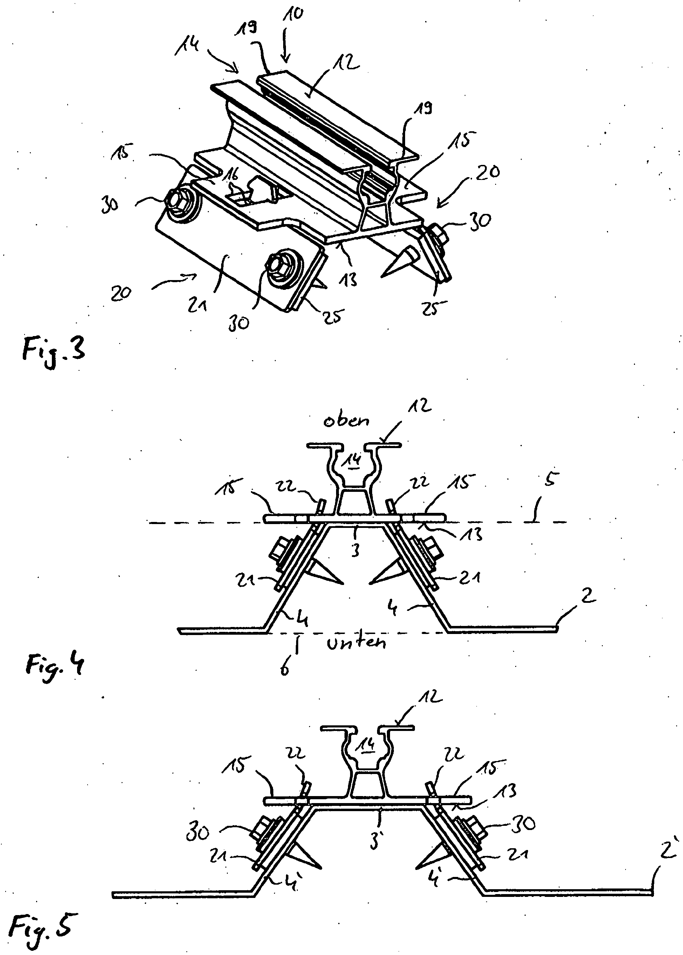

Die Erfindung betrifft auch eine Anordnung eines der vorbeschriebenen Montagesets auf einer trapezförmigen Rippe **1** eines Trapezblechs **2,** wobei die trapezförmige Rippe **1** eine Rippenoberseite **3** und zwei Rippenschrägseiten **4** aufweist. Eine solche Anordnung ist aus **Fig. 2** mit **Fig. 4** und **Fig. 5** ersichtlich und zeichnet sich dadurch aus, dass die Unterseite **12** der Rippenoberseite **3** zugewandt ist und der längliche Befestigungskanal **14** längs zu der trapezförmigen Rippe **1** gerichtet ist und der längliche Befestigungskanal **14** zentral über der Rippenoberseite **3** angeordnet ist und die Halterandpaare **16** sich mehrheitlich oberhalb einer parallel durch die Rippenoberseite **3** verlaufenden Ebene **5** erstrecken und sich jedes der Halterandpaare **16** zumindest abschnittweise freistehend über einer der zwei Rippenschrägseiten **4** befindet.

Außerdem ist vorgesehen, dass die zwei Halteelemente **20** in der parallelen Eingriffsstellung **B** sind und die Befestigungsabschnitte **21** mittels der Schrauben **30** oder alternativ Nieten an den zwei Rippenschrägseiten **4** befestigt sind, möglichst flächenparallei zu den Rippenschrägseiten **4**. Außerdem ist ersichtlich, dass die abstehenden Eingriffsmittel **22** die länglichen Halterandpaare **16** hintergreifen jeweils an einer von mehreren möglichen Längspositionen entlang der länglichen Halterandpaare **16** und in einer von mehreren möglichen Schwenkpositionen parallel zum Befestigungskanal **14**. Schließlich ist der Montageadapter mittels der abstehenden Eingriffsmittel **22** gegen die Rippenoberseite **3** niedergehalten und idealerweise zusätzlich geklemmt. Dabei ist weiter vorteilhaft, dass die gummiartigen Abstandsmittel **25** zwischen den Befestigungsabschnitten **21** und den Rippenschrägseiten **4** angeordnet sind und die eine gummiartige Schutzunterlage **32** zwischen der Rippenoberseite **3** und der Unterseite **13** angeordnet ist, wie im Detail aus **Fig. 15** und **Fig. 16** ersichtlich ist.

Des Weiteren ist zu erkennen, dass bezüglich der Rippenoberseite **3** die abstehenden Eingriffsmittel **22** steiler gerichtet sind als die Schrägseite **4**, an der diese befestigt sind. Dies kann dadurch erreicht werden, dass die abstehenden Eingriffsmittel **22** zu den Befestigungsabschnitten **21** wie zuvor beschreiben winklig angestellt sind.

Die Erfindung betrifft auch ein Montageverfahren zum Erlangen der vorbeschriebenen Anordnung mit einem Montageset, das gummiartige Abstandsmittel **25** enthält. Das Montageverfahren ist im Detail aus **Fig. 15** und **Fig. 16** zu erkennen. Das Montageverfahren zeichnet sich dadurch aus, dass während der Befestigung der Befestigungsabschnitte **21** an den Rippenschrägseiten **4** die gummiartigen Abstandsmittel **25** mit einer Bewegung **40** komprimiert werden und die zwei Halteelemente **20** dabei jeweils eine Bewegungskomponente **41** nach unten erfahren und die zwei Halteelementen **20** mittels der abstehenden Eingriffsmittel den Montageadapter **10** zunehmend gegen die Rippenoberseite **3** klemmen.

## Patentansprüche

1. Montageset, geeignet für eine trapezförmige Rippe (**1**) eines Trapezblechs (**2**), wobei die trapezförmige Rippe (**1**) eine Rippenoberseite (**3**) und zwei Rippenschrägseiten (**4**) aufweisen kann,
das Montageset umfasst einen Montageadapter (**10**) aufweisend eine Oberseite (**12**), eine Unterseite (**13**) die von der Oberseite (**12**) abgewandt ist, einen länglichen Befestigungskanal (**14**) der zur Oberseite (**12**) hin offen ist, und zwei Befestigungsflansche (**15**), wobei die Oberseite (**12**), die Unterseite (**13**), der längliche Befestigungskanal (**14**) und die zwei Befestigungsflansche (**15**) zusammen eine starre Einheit sind, und jeder der zwei Befestigungsflansche (**15**) ein längliches Halterandpaar (**16**) aufweist, das quer zu dem länglichen Befestigungskanal (**14**) gerichtet ist, und in einer Draufsicht auf die Oberseite (**12**) sich der längliche Befestigungskanal (**14**) zwischen den zwei Befestigungsflanschen (**15**) befindet,
das Montageset umfasst des Weiteren zwei Halteelemente (**20**) jeweils aufweisend einen Befestigungsabschnitt (**21**) und ein davon abstehendes Eingriffsmittel (**22**), wobei der Befestigungsabschnitt (**21**) und das abstehende Eingriffsmittel (**22**) eines jeden der zwei Halteelemente (**20**) zusammen eine integrale und/oder starre Einheit sind, und jedes Halteelement (**20**) eine vom Montageadapter (**10**) separate Losstellung (**A**) und eine bezüglich des Befestigungskanals (**14**) parallele Eingriffsstellung (**B**) aufweisen kann, wobei
das abstehende Eingriffsmittel (**22**) eines jeden Halteelements (**20**) dergestalt ausgeführt ist, dass erstens ausgehend von der vom Montageadapter (**10**) separaten Losstellung (**A**) das abstehende Eingriffsmittel (**22**) mit einem der länglichen Halterandpaare (**16**) in Eingriff gebracht werden kann, und zweitens in der parallelen Eingriffsstellung (**B**) das abstehende Eingriffsmittel (**22**) das längliche Halterandpaar (**16**) hintergreifen kann an einer von mehreren möglichen Längspositionen entlang des länglichen Halterandpaares (**16**) und in einer von mehreren möglichen Schwenkpositionen parallel zum Befestigungskanal (**14**),
und der Montageadapter (**10**) dergestalt ausgeführt ist und auf der Rippenoberseite (**3**) angeordnet werden kann, dass die Unterseite (**13**) der Rippenoberseite (**3**) zugewandt ist und der Befestigungskanal (**14**) längs zu der trapezförmigen Rippe (**1**) gerichtet ist und der Befestigungskanal (**14**) zentral über der Rippenoberseite (**3**) angeordnet ist und die Halterandpaare (1**6**) sich mehrheitlich oberhalb einer parallel durch die Rippenoberseite (**3**) verlaufenden Ebene (**5**) erstrecken und sich zumindest abschnittweise freistehend über den zwei Rippenschrägseiten (**4**) befinden,
und die Befestigungsabschnitte (**21**) und die abstehenden Eingriffsmittel (**22**) dergestalt ausgeführt sind, dass in der parallelen Eingriffsstellung (**B**) die Befestigungsabschnitte (**21**) mittels Schrauben (**30**) oder Nieten an den zwei Rippenschrägseiten (**4**) befestigt sein können und der Montageadapter (**10**) mittels der abstehenden Eingriffsmittel (**22**) gegen die Rippenoberseite (**3**) niedergehalten werden kann.

2. Montageset nach einem der vorhergehenden Ansprüche, **dadurch gekennzeichnet, dass** mindestens einer der zwei Befestigungsflansche (**15**) eine Längsausnehmung (**17**) enthält, die zu dem Befestigungskanal (**14**) quer gerichtet ist, und mindestens eines der länglichen Halterandpaare (**16**) mittels einander zugewandter Ränder (**16**) der Längsausnehmung (**17**) ausgeführt ist.

3. Montageset nach einem der vorhergehenden Ansprüche, **dadurch gekennzeichnet, dass** von mindestens einem der Halteelemente (**20**) das abstehende Eingriffsmittel (**22**) zwei voneinander weg weisende oder zwei aufeinander zu weisende Vorsprünge (**24**) aufweist, um eines der länglichen Halterandpaare (**16**) beidseitig zu hintergreifen.

4. Montageset nach einem der vorhergehenden Ansprüche, **dadurch gekennzeichnet, dass** mindestens eines der länglichen Halterandpaare (**16**) mittels voneinander abgewandter Ränder (**16**) eines der zwei Befestigungsflansche (**15**) ausgeführt ist, und mindestens ein Befestigungsflansch (**15**) optional einen Endanschlag (**26**) für eines der Halteelemente (**20**) aufweist.

5. Montageset nach einem der vorhergehenden Ansprüche, **dadurch gekennzeichnet, dass** der längliche Befestigungskanal (**14**) zwei Längsenden (**19**) aufweist und in einer Draufsicht auf die Oberseite (**12**) sich die Befestigungsflansche (**15**) und/oder die Halterandpaare (**16**) mittig bezüglich der Längsenden (**19**) befinden.

6. Montageset nach einem der vorhergehenden Ansprüche, **dadurch gekennzeichnet, dass** von mindestens einem der Halteelemente (**20**) das abstehende Eingriffsmittel (**22**) zu dem Befestigungsabschnitt (**21**) winklig angestellt ist und/oder das abstehende Eingriffsmittel (**22**) an dem Befestigungsabschnitt (**21**) mittig angeordnet ist und/oder dass von mindestens einem der Halteelemente (**20**) das abstehende Eingriffsmittel (**22**) und der Befestigungsabschnitt (**21**) zusammen ein einteiliges Blechstück sind.

7. Montageset nach einem der vorhergehenden Ansprüche, **dadurch gekennzeichnet, dass** das Montageset mindestens eine gummiartige Schutzunterlage (**23**) aufweist, die zur Anordnung zwischen der Rippenoberseite (**3**) und der Unterseite (**13**) vorgesehen ist.

8. Montageset nach einem der vorhergehenden Ansprüche, **dadurch gekennzeichnet, dass** mindestens einer der Halteelemente (**20**) ein gummiartiges Abstandsmittel (**25**) zugeordnet ist, das an dem Befestigungsabschnitt (**21**) optional befestigt ist und das zur Anordnung zwischen dem Befestigungsabschnitt (**21**) und einer der zwei Rippenschrägseiten (**4**) vorgesehen ist.

9. Montageset nach Anspruch 7 und 8, dass die mindestens eine gummiartige Schutzunterlage (**23**) an einem der gummiartigen Abstandsmittel (**25**) angeformt ist.

10. Montageset nach einem der vorhergehenden Ansprüche, bestehend aus dem Montageadapter (**10**) und den zwei Halteelementen (**20**) sowie optional Schrauben (**30**) oder Nieten.

11. Anordnung eines Montagesets nach einem der Ansprüche 1 bis 10 und einer trapezförmigen Rippe (**1**) eines Trapezblechs (**2**), wobei die trapezförmige Rippe (**1**) eine Rippenoberseite (**3**) und zwei Rippenschrägseiten (**4**) aufweist,
und die Unterseite (**12**) der Rippenoberseite (**3**) zugewandt ist und der längliche Befestigungskanal (**14**) längs zu der trapezförmigen Rippe (**1**) gerichtet ist und der längliche Befestigungskanal (**14**) zentral über der Rippenoberseite (**3**) angeordnet ist und die Halterandpaare (**16**) sich mehrheitlich oberhalb einer parallel durch die Rippenoberseite (**3**) verlaufenden Ebene (**5**) erstrecken und sich jedes der Halterandpaare (**16**) zumindest abschnittweise freistehend über einer der zwei Rippenschrägseiten (**4**) befindet,
und die zwei Halteelemente (**20**) in der parallelen Eingriffsstellung (**B**) sind und die Befestigungsabschnitte (**21**) mittels Schrauben (**30**) oder Nieten an den zwei Rippenschrägseiten (**4**) befestigt sind und die abstehenden Eingriffsmittel (**22**) die länglichen Halterandpaare (**16**) hintergreifen jeweils an einer von mehreren möglichen Längspositionen entlang der länglichen Halterandpaare (**16**) und in einer von mehreren möglichen Schwenkpositionen parallel zum Befestigungskanal (**14**),
und der Montageadapter mittels der abstehenden Eingriffsmittel (**22**) gegen die Rippenoberseite (**3**) niedergehalten ist.

12. Anordnung nach Anspruch 11 enthaltend ein Montageset nach Anspruch 7, **dadurch gekennzeichnet, dass** die mindestens eine gummiartige Schutzunterlage (**23**) zwischen der Rippenoberseite (**3**) und der Unterseite (**13**) angeordnet ist.

13. Anordnung nach Anspruch 11 enthaltend ein Montageset nach Anspruch 8, **dadurch gekennzeichnet, dass** das mindestens eine gummiartigen Abstandsmittel (**25**) zwischen einem Befestigungsabschnitt (**21**) und einer Rippenschrägseite (**4**) angeordnet ist.

14. Anordnung nach Anspruch 11 enthaltend ein Montageset nach Anspruch 9, **dadurch gekennzeichnet, dass** bezüglich der Rippenoberseite (**3**) mindestens eines der abstehendes Eingriffsmittel (**22**) steiler gerichtet ist als die Schrägseite (**4**), an der dieses befestigt sind.

15. Montageverfahren zum Erlangen einer Anordnung nach Anspruch 13, **dadurch gekennzeichnet, dass** ein Montageset nach einem der Ansprüche 1 bis 10 bereitgestellt wird, wobei während der Befestigung der Befestigungsabschnitte (**21**) an den Rippenschrägseiten (**4**) die gummiartigen Abstandsmittel (**25**) komprimiert (**40**) werden und die zwei Halteelemente (**20**) dabei jeweils eine Bewegungskomponente (**41**) nach unten erfahren und die zwei Halteelemente (**20**) mittels der abstehenden Eingriffsmittel den Montageadapter (**10**) zunehmend gegen die Rippenoberseite (**3**) klemmen.

## Claims

1. A mounting kit which is suitable for a trapezoidal rib (1) of a trapezoidal metal sheet (2), wherein the trapezoidal rib (1) may have a top rib side (3) and two slanted rib sides (4),
the mounting kit includes a mounting adapter (10) which has a top side (12), a bottom side (13) facing away from the top side (12), an elongated fixing channel (14) which is open at the top side (12), and two fixing flanges (15), wherein the top side (12), the bottom side (13), the elongated fixing channel (14), and the two fixing flanges (15) together are a rigid unit, and each of the two fixing flanges (15) has a pair of elongated retaining edges (16) which are oriented transversely with respect to the elongated fixing channel (14), and the elongated fixing channel (14) is situated between the two fixing flanges (15) in a top view of the top side (12),
the mounting kit further includes two retaining elements (20), each of which has a fixing section (21) and an engagement means (22) protruding therefrom, wherein the fixing section (21) and the protruding engagement means (22) of each of the two retaining elements (20) together are an integral and/or rigid unit, and each retaining element (20) may have a released position (A) which is detached from the mounting adapter (10), and an engaged position (B) which is parallel to the fixing channel (14),
the protruding engagement means (22) of each retaining element (20) is designed in such a way that firstly, starting from the released position (A) which is detached from the mounting adapter (10), the protruding engagement means (22) may be brought into engagement with one of the pairs of elongated retaining edges (16), and secondly, in the parallel engaged position (B), the protruding engagement means (16) may engage behind the elongated pair of retaining edges (16), and in one of multiple possible swivel positions parallel to the fixing channel (14), and
the mounting adapter (10) is designed, and may be situated on the top rib side (3), in such a way that the bottom side (13) faces the top rib side (3), and the fixing channel (14) is oriented lengthwise with respect to the trapezoidal rib (1), the fixing channel (14) is centrally situated above the top rib side (3), and the majority of the pairs of retaining edges (16) extend above a plane (5) running parallel through the top rib side (3), and, at least in sections, are situated in a free-standing manner above the two slanted rib sides (4), and
the fixing sections (21) and the protruding engagement means (22) are designed in such a way that in the parallel engaged position (B), the fixing sections (21) may be fastened to the two slanted rib sides (4) by means of screws (30) or rivets, and the mounting adapter (10) may be held down against the top rib side (3) by means of the protruding engagement means (22).

2. The mounting kit according to one of the preceding claims, **characterized in that** at least one of the two fixing flanges (15) contains a longitudinal recess (17) oriented transversely with respect to the fixing channel (14), and at least one of the elongated pairs of retaining edges (16) is designed with mutually facing edges (16) of the longitudinal recess (17).

3. The mounting kit according to one of the preceding claims, **characterized in that** for at least one of the retaining elements (20), the protruding engagement means (22) has two projections (24) which face away from one another or which are to face toward one another in order to engage behind one of the elongated pairs of retaining edges (16) on both sides.

4. The mounting kit according to one of the preceding claims, **characterized in that** at least one of the elongated pairs of retaining edges (16) is designed with edges (16) of one of the two fixing flanges (15) facing away from one another, and at least one fixing flange (15) optionally has an end stop (26) for one of the retaining elements (20).

5. The mounting kit according to one of the preceding claims, **characterized in that** the elongated fixing channel (14) has two longitudinal ends (19), and in a top view of the top side (12), the fixing flanges (15) and/or the pairs of retaining edges (16) are centrally situated relative to the longitudinal ends (19).

6. The mounting kit according to one of the preceding claims, **characterized in that** for at least one of the retaining elements (20), the protruding engagement means (22) is at an angle with respect to the fixing section (21), and/or the protruding engagement means (22) is centrally situated on the fixing section (21), and/or for at least one of the retaining elements (20), the protruding engagement means (22) and the fixing section (21) together are a one-piece metal sheet.

7. The mounting kit according to one of the preceding claims, **characterized in that** the mounting kit has at least one rubber-like protective underlay (23) which is provided for being situated between the top rib side (3) and the bottom side (13).

8. The mounting kit according to one of the preceding claims, **characterized in that** a rubber-like spacer (25), which is optionally fastened to the fixing section (21) and is provided for being situated between the fixing section (21) and one of the two slanted rib sides (4), is associated with at least one of the retaining elements (20).

9. The mounting kit according to Claims 7 and 8, **characterized in that** the at least one rubber-like protective underlay (23) is integrally molded onto one of the rubber-like spacers (25).

10. The mounting kit according to one of the preceding claims, comprising the mounting adapter (10) and the two retaining elements (20) as well as optional screws (30) or rivets.

11. An arrangement of a mounting kit according to one of Claims 1 to 10 and a trapezoidal rib (1) of a trapezoidal metal sheet (2), wherein the trapezoidal rib (1) has a top rib side (3) and two slanted rib sides (4), and
the bottom side (12) faces the top rib side (3), the elongated fixing channel (14) is oriented lengthwise with respect to the trapezoidal rib (1), the elongated fixing channel (14) is centrally situated above the top rib side (3), and the majority of the pairs of retaining edges (16) extend above a plane (5) running parallel through the top rib side (3), and each pair of retaining edges (16), at least in sections, is situated in a free-standing manner above the two slanted rib sides (4), and
the two retaining elements (20) are in the parallel engaged position (B), the fixing sections (21) are fastened to the two slanted rib sides (4) by means of screws (30) or rivets, and the protruding engagement means (22) engage behind the elongated pairs of retaining edge (16), in each case at one of multiple possible longitudinal positions along the elongated pairs of retaining edges (16), and in one of multiple possible swivel positions parallel to the fixing channel (14), and
the mounting adapter is held down against the top rib side (3) by means of the protruding engagement means (22).

12. The arrangement according to Claim 11, including a mounting kit according to Claim 7, **characterized in that** the at least one rubber-like protective underlay (23) is situated between the top rib side (3) and the bottom side (13).

13. The arrangement according to Claim 11, including a mounting kit according to Claim 8, **characterized in that** the at least one rubber-like spacer (25) is situated between a fixing section (21) and a slanted rib side (4).

14. The arrangement according to Claim 11, including a mounting kit according to Claim 9, **characterized in that**, with respect to the top rib side (3), at least one of the protruding engagement means (22) is oriented more steeply than the slanted side (4) to which the engagement means is fastened.

15. A mounting method for obtaining an arrangement according to Claim 13, **characterized in that** a mounting kit according to one of Claims 1 to 10 is provided, wherein during the fastening of the fixing sections (21) to the slanted rib sides (4), the rubber-like spacers (25) are compressed (40), the two retaining elements (20) in each case undergo a downward motion component (41), and the two retaining elements (20) increasingly clamp the mounting adapter (10) against the top rib side (3) by means of the protruding engagement means.

## Revendications

1. Kit de montage conçu pour une nervure trapézoïdale (1) d'une tôle trapézoïdale (2), ladite nervure trapézoïdale (1) pouvant présenter un côté supérieur plat (3) et deux côtés latéraux obliques (4),
ce kit de montage comprend un adaptateur de montage (10) présentant une face supérieure (12), une face inférieure (13) opposée à ladite face supérieure (12), un canal de fixation allongé (14) qui est ouvert vers la face supérieure (12) et deux brides de fixation (15), la face supérieure (12), ladite face inférieure (13), ledit canal de fixation allongé (14) et lesdites deux brides de fixation (15) formant ensemble une unité rigide, et chacune des deux brides de fixation (15) présentant une paire de bords de retenue allongés (16) qui sont orientés perpendiculairement au canal de fixation allongé (14), et le canal de fixation allongé (14), considéré dans une vue en plan du côté supérieur plat (12), étant situé entre les deux brides de fixation (15),
ce kit de montage comprend en outre deux éléments de maintien (20) présentant respectivement un segment de fixation (21) et un moyen d'engagement (22) qui fait saillie dudit segment, ledit segment de fixation (21) et ledit moyen d'engagement (22) de chacun desdits deux éléments de maintien (20) formant ensemble une unité intégrale et/ou rigide, et chaque élément de maintien (20) pouvant présenter une position démontée (A) dans laquelle il est séparé de l'adaptateur de montage (10) et une position d'engagement (B) parallèle au canal de fixation (14),
le moyen d'engagement (22) en saillie de chaque élément de maintien (20) étant conçu de sorte que dans un premier temps et partant de la position démontée (A) dans laquelle l'élément de maintien (20) est séparé de l'adaptateur de montage (10), le moyen d'engagement (22) peut être mis en prise avec l'une des paires de bords de retenue allongés (16) et que dans un deuxième temps et en position de prise (B) parallèle, le moyen d'engagement (22) vient par derrière en prise avec la paire de bords de retenue allongés (16) pour occuper une position parmi plusieurs positions longitudinales possibles le long de la paire de bords de retenue allongés (16) et une position parmi plusieurs positions de pivotement possibles parallèlement au canal de fixation (14),
et l'adaptateur de montage (10) est conçu et peut être disposé sur le côté supérieur plat (3) de la nervure de telle sorte que la face inférieure (13) est tournée vers le côté supérieur plat (3) de la nervure, que le canal de fixation (14) est orienté le long de la nervure trapézoïdale (1), que le canal de fixation (14) est disposé de manière centrale au-dessus du côté supérieur plat (3) de la nervure et que les paires de bords de retenue (16) s'étendent majoritairement au-dessus d'un plan (5) s'étendant lui-même parallèlement à travers le côté supérieur plat (3) de la nervure et se trouvent au moins pour partie dans une position dégagée au-dessus des côtés latéraux obliques (4) de la nervure,
et les segments de fixation (21) et les moyens d'engagement (22) en saillie sont réalisés de telle sorte qu'en position de prise parallèle (B), les segments de fixation (21) peuvent être fixés à l'aide de vis (30) ou de rivets aux deux côtés latéraux obliques (4) de la nervure et que l'adaptateur de montage (10) peut être maintenu en place contre le côté supérieur plat (3) de la nervure à l'aide des moyens d'engagement (22) en saillie.

2. Kit de montage selon l'une des revendications précédentes, **caractérisé en ce qu'**au moins une des deux brides de fixation (15) présente un évidement longitudinal (17) qui est orienté perpendiculairement au canal de fixation (14), et qu'au moins une des paires de bords de retenue allongés (16) est réalisée au moyen de bords (16) tournés l'un vers l'autre dudit évidement longitudinal (17).

3. Kit de montage selon l'une des revendications précédentes, **caractérisé en ce que** le moyen d'engagement (22) faisant saillie d'au moins un des éléments de maintien (20) présente deux épaulements (24) s'écartant l'un de l'autre ou dirigés l'une vers l'autre pour venir par derrière en prise de part et d'autre avec une des paires de bords de retenue allongés (16).

4. Kit de montage selon l'une des revendications précédentes, **caractérisé en ce qu'**au moins une des paires de bords de retenue allongés (16) est réalisée au moyen de bords (16) opposés d'une des deux brides de fixation (15), et qu'au moins une bride de fixation (15) présente optionnellement une butée de fin de course (26) pour un des éléments de maintien (20).

5. Kit de montage selon l'une des revendications précédentes, **caractérisé en ce que** le canal de fixation allongé (14) présente deux extrémités longitudinales (19) et que considérées dans une vue en plan du côté supérieur plat (12), la bride de fixation (15) et/ou les paires de bords de retenue (16) sont situées de manière centrale par rapport auxdites extrémités longitudinales (19).

6. Kit de montage selon l'une des revendications précédentes, **caractérisé en ce que** le moyen d'engagement (22) faisant saillie d'au moins un des éléments de maintien (20) est placé angulairement par rapport au segment de fixation (21) et/ou le moyen d'engagement (22) en saillie est disposé de manière centrale sur le segment de fixation (21) et/ou que le moyen d'engagement (22) faisant saillie d'au moins un des éléments de maintien (20) et le segment de fixation (21) forment ensemble une seule pièce de tôle.

7. Kit de montage selon l'une des revendications précédentes, **caractérisé en ce que** le kit de montage présente au moins un support protecteur (23) qui a l'élasticité du caoutchouc et est prévu pour être placé entre le côté supérieur plat (3) de la nervure et la face inférieure (13).

8. Kit de montage selon l'une des revendications précédentes, **caractérisé en ce qu'**au moins un des éléments de maintien (20) est associé à un moyen d'espacement (25) qui a l'élasticité du caoutchouc et est optionnellement fixé au segment de fixation (21) et qui est prévu pour être placé entre le segment de fixation (15) et l'un des deux côtés latéraux obliques (4) de la nervure.

9. Kit de montage selon les revendications 7 et 8, **caractérisé en ce que** ledit au moins un support protecteur (23) qui a l'élasticité du caoutchouc est formé sur un des moyens d'espacement (25) ayant l'élasticité du caoutchouc.

10. Kit de montage selon l'une des revendications précédentes, constitué par l'adaptateur de montage (10) et par deux éléments de maintien (20) et optionnellement par des vis (30) ou des rivets.

11. Agencement constitué par un kit de montage selon l'une des revendications 1 à 10 et par une nervure trapézoïdale (1) d'une tôle trapézoïdale (2), la nervure trapézoïdale (1) présentant un côté supérieur plat (3) et deux côtés latéraux obliques (4),
et la face inférieure (12) étant tournée vers le côté supérieur plat (3) de la nervure et le canal de fixation allongé (14) étant orienté longitudinalement par rapport à la nervure trapézoïdale (1) et le canal de fixation allongé (14) étant disposé de manière centrale au-dessus du côté supérieur plat (3) de la nervure et les paires de bords de retenue (16) s'étendant majoritairement au-dessus d'un plan (5) s'étendant lui-même parallèlement à travers le côté supérieur se trouvant située au moins pour partie dans une position dégagée au-dessus d'un des deux côtés latéraux obliques (4) de la nervure,
et les deux éléments de maintien (20) étant en position de prise parallèle (B) et les segments de fixation (21) étant fixés au moyen de vis (30) ou de rivets aux deux côtés latéraux obliques (4) de la nervure et les moyens d'engagement (22) en saillie venant par derrière en prise avec les paires de bords de retenue allongés (16) pour respectivement occuper une position parmi plusieurs positions longitudinales possibles le long de la paire de bords de retenue allongés (16) et une position parmi plusieurs positions de pivotement possibles parallèlement au canal de fixation (14).

12. Agencement selon la revendication 11, comportant un kit de montage selon la revendication 7, **caractérisé en ce que** ledit au moins un support protecteur (23) est disposé entre le côté supérieur plat (3) de la nervure et la face inférieure (13).

13. Agencement selon la revendication 11, comportant un kit de montage selon la revendication 8, **caractérisé en ce que** ledit au moins un moyen d'espacement (25) est disposé entre un segment de fixation (21) et un côté latéral oblique (4) de la nervure.

14. Agencement selon la revendication 11, comportant un kit de montage selon la revendication 9, **caractérisé en ce que** par rapport au côté supérieur plat (3) de la nervure, au moins un des moyens d'engagement (22) en saillie est orienté de manière plus raide que le côté latéral oblique (4) sur lequel il est fixé.

15. Procédé de montage pour obtenir un agencement selon la revendication 13, **caractérisé en ce qu'**il est fourni un kit de montage selon l'une des revendications 1 à 10, les moyens d'espacement (25) ayant l'élasticité du caoutchouc étant comprimés pendant la fixation des segments de fixation (21) contre les côtés latéraux obliques (4) de la nervure et une composante de mouvement vers le bas étant ce faisant respectivement imprimée aux deux éléments de maintien (20) et les deux éléments de maintien (20) serrant toujours plus l'adaptateur de montage (10) contre le côté supérieur plat (3) de la nervure à l'aide des moyens d'engagement en saillie.
